(19) Europäisches Patentamt

European Patent Office

Office européen des brevets

(11) **EP 4 672 029 A1**

(12) **EUROPEAN PATENT APPLICATION**

(43) Date of publication:
    **31.12.2025  Bulletin 2026/01**

(21) Application number: **25184142.5**

(22) Date of filing: **20.06.2025**

(51) International Patent Classification (IPC):
    **G06F 16/532** (2019.01)    **G06F 16/535** (2019.01)
    **G06F 16/58** (2019.01)

(52) Cooperative Patent Classification (CPC):
    **G06F 16/532; G06F 16/535; G06F 16/5866**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority:  **24.06.2024  IN 202421048432**

(71) Applicant: **Tata Consultancy Services Limited
    Maharashtra (IN)**

(72) Inventors:
    • **BHATTACHARYA, Gaurab
      560066 Bangalore, Karnataka (IN)**

    • **GUBBI LAKSHMINARASIMHA, Jayavardhana
      Rama
      560066 Bangalore, Karnataka (IN)**
    • **BANGALORE SAMPATHKUMAR, Vivek
      560066 Bangalore, Karnataka (IN)**
    • **VASUDEVAN, Bagya Lakshmi
      600096 Chennai, Tamilnadu (IN)**
    • **PAL, Arpan
      700160 Kolkata, West Bengal (IN)**

(74) Representative: **Goddar, Heinz J.
    Boehmert & Boehmert
    Anwaltspartnerschaft mbB
    Pettenkoferstrasse 22
    80336 München (DE)**

(54) **METHOD AND SYSTEM TO RECOMMEND COMPLEMENTARY ITEMS THROUGH CANDIDATE TARGET ITEM GENERATION**

(57)   This disclosure relates generally to method and system to recommend complementary items by generating candidate items. Complementary recommendation is an important problem in e-commerce platforms that gives compatible suggestions to the users based on recent purchase and pre-selected items. The method receives a mixed query as input from a user to obtain complementary target candidate image items. The mixed query includes a set of product category images along with product category label preselected by the user. Further, for the mixed query a target latent representation for the combined latent representation is generated. Then, a set of compatible complementary target candidate image items is retrieved for the one or more target candidate images from a retrieval gallery. Finally, the set of compatible complementary target candidate image items are displayed on electronic device of the user.

FIG.2

## Description

CROSS-REFERENCE TO RELATED APPLICATIONS AND PRIORITY

The present application claims priority from Indian provisional application no. 202421048432, filed on June 24, 2024.

TECHNICAL FIELD

The disclosure herein generally relates to complementary items generation, and, more particularly, to method and system to recommend complementary items through candidate target item generation.

BACKGROUND

Complementary recommendation is an important problem in e-commerce platforms that provide compatible suggestions to users based on recent purchase and pre-selected items or most likely context based matching items. The recommendation is mostly built upon individual perception of compatibility, and it is difficult to obtain ground truth label for multiple user requests. For example, in an e-commerce website, the complementary item retrieval engine must suggest a compatible shoe and a belt for pre-selected compatible shirt and trouser(s) by the user. However, an effective recommendation engine may cater to diverse user needs and preferences to retrieve compatible products matching items based on previous selection or purchase by the user. Performance of recommendation engine increases based on user or customer satisfaction thereby high revenue growth is achieved in e-commerce business.

However, there exists a set of unique challenges that prevents existing recommendation engines to directly migrate for retrieval of complementary items from a retrieval gallery. Unlike similar item search, the performance of complementary item search relies on compatibility or retrieving compatible items. For example, in global style fashion industry matching an incomplete fashion outfit with complementary items significantly varies with respect to location, age, attributes, season, occasion, etc., and hence there is no unique solution. Thus, complementary item retrieval is a challenging problem where target annotation involves annotation bias.

With the advent of computer vision, several research works have attempted to build complementary item retrieval engines. Existing methods such as Siamese networks for pair-wise compatibility modelling, Bi-LSTM for outfits arranged in ordered sequence, categorical sub-space complementary features, disentangled attribute feature sub-space, global outfit representation using transformer enforce compatibility information by considering positive images and negative images with respect to pre-selected outfits as annotated by few annotators, hence capturing such annotation bias.

Also, such existing methods are deterministic in nature and they tend to provide same solution for all user's contradictory to the nature of user preference challenge. Further, existing recommendation models lack in providing complementary items based on user preferences. Moreover, existing complementary recommendation models consider various datasets labelled by one-or-more annotators for model fitting as compatible complementary data. Such recommendation models based on these annotations are biased towards annotators preference and hence cannot be generalized. To address such challenges, a complementary recommendation technique is required to identify closest or most compatible image(s) from retrieval gallery that matches target category and other complementary items to cater user preferences.

SUMMARY

Embodiments of the present disclosure present technological improvements as solutions to one or more of the above-mentioned technical problems recognized by the inventors in conventional systems. For example, in one embodiment, a system to recommend complementary items through candidate target item generation is provided. The system includes to receive a mixed query from a user comprising a set of product category images along with product category label to obtain complementary target candidate image items. The set of product category images are preselected by the user. The set of product category images are concatenated with one hot encoding of the product category labels to obtain an image latent representation. Further, the image latent representation is provided to a transformer encoder to obtain combined latent representation of the mixed query to generate a target latent representation for the combined latent representation of the mixed query. Further, the combined latent representation is generated by a decoder using one or more target candidate images corresponding to a target latent representation based on a target category condition and a complementary criteria. Finally, a set of compatible complementary target candidate image items are retrieved for the one or more target candidate images from a retrieval gallery. The set of compatible complementary target candidate image items are displayed on electronic device of the user.

**In** another aspect, a method to recommend complementary items through candidate target item generation is provided. The method includes to receive a mixed query from a user comprising a set of product category images along with product category label to obtain complementary target candidate image items. The set of product category images are preselected by the user. The set of product category images are concatenated with one hot encoding of the product category labels to obtain an image latent representation. Further, the image latent representation is provided to a transformer encoder to obtain combined latent representation of the mixed query to generate a target latent representation for the combined latent representation of the mixed query. Further, the combined latent representation is generated by a decoder using one or more target candidate images corresponding to a target latent representation based on a target category condition and a complementary criteria. Finally, a set of compatible complementary target candidate image items are retrieved for the one or more target candidate images from a retrieval gallery. The set of compatible complementary target candidate image items are displayed on electronic device of the user.

In yet another aspect, a non-transitory computer readable medium to recommend complementary items through candidate target item generation is provided. The system includes receiving a mixed query from a user comprising a set of product category images along with product category label to obtain complementary target candidate image items. The set of product category images are preselected by the user. The set of product category images are concatenated with one hot encoding of the product category labels to obtain an image latent representation. Further, the image latent representation is provided to a transformer encoder to obtain combined latent representation of the mixed query to generate a target latent representation for the combined latent representation of the mixed query. Further, the combined latent representation is generated by a decoder using one or more target candidate images corresponding to a target latent representation based on a target category condition and a complementary criteria. Finally, a set of compatible complementary target candidate image items are retrieved for the one or more target candidate images from a retrieval gallery. The set of compatible complementary target candidate image items are displayed on electronic device of the user.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an illustrative system (alternatively referred as complementary item recommendation system) to recommend complementary items through candidate target item generation, in accordance with some embodiments of the present disclosure.

FIG.2 illustrates a block diagram of the system depicting an inference phase to recommend complementary items in response to a mixed query of an user, in accordance with an embodiment of the present disclosure.

FIG.3A and FIG.3B (collectively referred as FIG.3) depicts a flow diagram of an example process to recommend complementary items for the mixed query of the user request using the system of FIG. 1, in accordance with an embodiment of the present disclosure.

FIG.4 is an example block diagram depicting an training phase to classify real images and fake images from a set of compatible target image items using the system of FIG. 1, in accordance with an embodiment of the present disclosure.

FIG.5 is an example block diagram depicting an complementary latent generator module to recommend complementary items for the mixed query using the system of FIG. 1, in accordance with an embodiment of the present disclosure.

FIG.6 illustrates a fashion outfit example generating a set of complementary items for the mixed query using the system of FIG. 1, in accordance with an embodiment of the present disclosure.

FIG.7 illustrates the fashion outfit example generating the set of complementary items for one anchor image using the system of FIG. 1, in accordance with an embodiment of the present disclosure.

FIG.8 illustrates visual examples of retrieving the set of complementary items from a retrieval gallery for the target candidate image without ground-truth target item using the system of FIG. 1, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In e-commerce industry conditioning during image generation is an important problem for complementary item retrieval that enables retailers to suggest items compatible to user preference. Such challenging problems were attempted since the inception of generative adversarial networks (GANs). Conditional GAN (cGAN) and conditional variational auto-encoder (CVAE) consider class labels as a condition during image generation. This concept is extended in Pix2Pix for image-to-image translation. InfoGAN performs conditioning information propagation for discrete and continuous conditions. Multi-conditional generative adversarial network (MC-GAN) performs multi-conditional image synthesis involving conditions from different domains. In StyleGAN, image synthesis is augmented with a style embedding which conditions the generation process. Auxiliary classifier generative adversarial network (AC-GAN) incorporated auxiliary classifiers enhances conditioning ability during image generation. However, none of these existing methods focus on generating images following the notion of compatibility and hence do not perform well while generating images with consistent style representation with pre-selected compatible items.

To incorporate variability in retrieval and compatibility between items, the problem is defined as "recommendation by generation", i.e., first generating a set of candidate target images complementary to the pre-selected compatible items and then using the set of candidate target images to retrieve most similar items from a retrieval gallery.

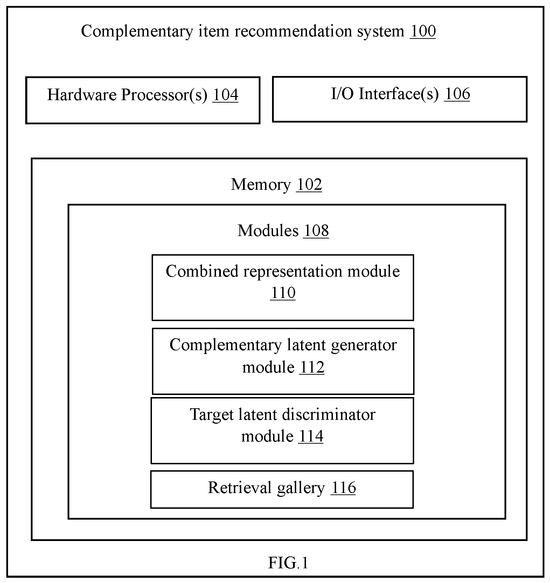

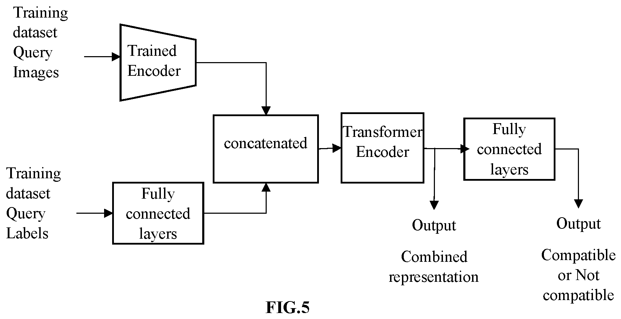

Embodiments herein provide a method and system to method and system to recommend complementary items through candidate target item generation. The system may be alternatively referred as a complementary item recommendation system. The system is capable of generating latent representation of a target complementary image for a mixed query received as input from a user. The target complementary item must be consistent with pre-selected compatible items ensuring compatibility. Further, utilization of classifier guidance and conditioning image information propagation through discriminator ensures latent representation of target category. Also, the method of the present disclosure does not require positive and negative target image annotations for variations. To satisfy dynamic nature of recommendation, variability in images is an important criteria without losing compatibility between items. The generative model creates a set of target candidate images on user preferences to retrieve similar items from an retrieval gallery. The retrieved images enables retrieval with user preferences and variability, thereby satisfying needs and improving sales. The disclosed system is further explained with the method as described in conjunction with FIG. 1 to FIG.8 below.

Referring now to the drawings, and more particularly to FIG. 1 through FIG.8, where similar reference characters denote corresponding features consistently throughout the figures, there are shown preferred embodiments and these embodiments are described in the context of the following exemplary system and/or method.

FIG. 1 is an illustrative system (alternatively referred as complementary item recommendation system) to recommend complementary items through candidate target item generation, in accordance with some embodiments of the present disclosure. In an embodiment, the complementary item recommendation system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

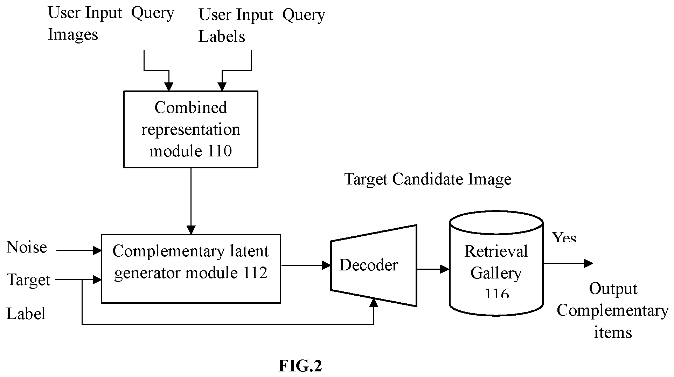

In an embodiment, the memory 102 includes a plurality of modules 108 and can also include various sub-modules as depicted in FIG.2. The plurality of modules includes a combined representation module 110, a complementary latent generator module 112 and the like. The plurality of modules 108 include programs or coded instructions that supplement applications or functions performed by the system 100 for executing different steps involved in the process to recommend complementary items through candidate target item generation of the system 100. The plurality of modules 108, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 108 can be used by hardware, by computer-readable instructions executed by the one or more hardware processors 104, or by a combination thereof.

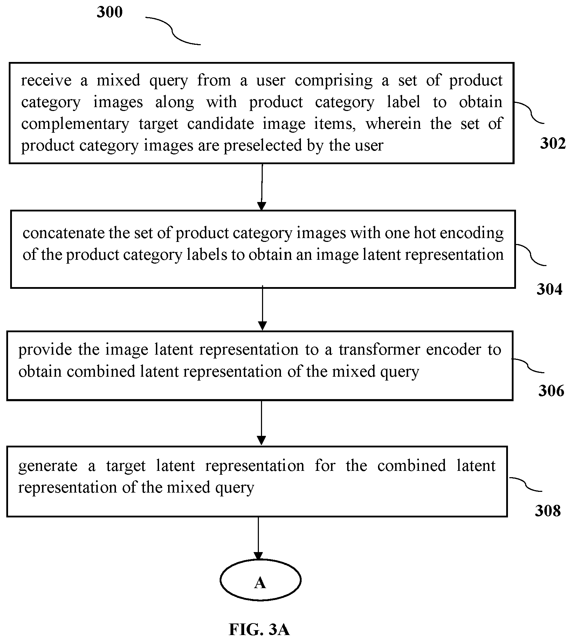

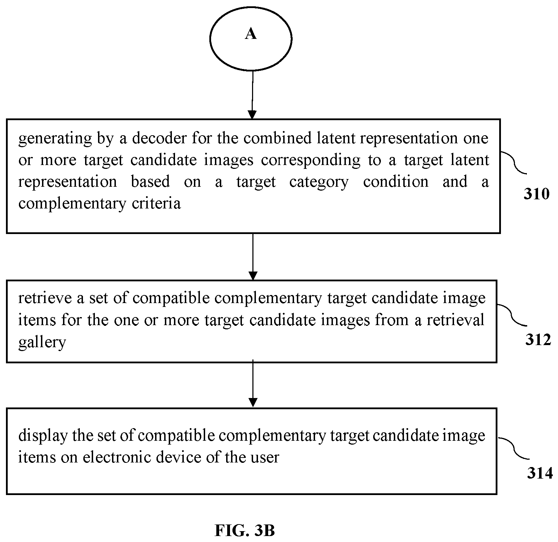

The memory 102 may comprise information pertaining to input(s)/output(s) of each step performed by the processor(s) 104 of the system 100 and methods of the present disclosure. Functions of the components of system 100, to recommend complementary items by generating candidate items, are explained in conjunction with FIG.2 and FIG.3 providing flow diagram, architectural overviews, and performance analysis of the system 100.

FIG.2 illustrates a block diagram of the system example depicting an inference phase to recommend complementary items in response to a mixed query of an user, in accordance with an embodiment of the present disclosure.

FIG.2 includes a combined representation module 110, a complementary latent generator module 112, a target latent discriminator module 114, and a retrieval gallery 116. Referring to an example, where the user visits an e-commerce website to buy for example a fashion outfit for the user providing a mixed query as input to the system. The mixed query includes combination of a set of product category images along with product category labels. The system processes the mixed query to generate at least one target candidate image item and then retrieve at least one target item from the retrieval gallery 116. The retrieval gallery 116 suggests a compatible shoe and a belt for the given pre-selected example compatible shirt and trouser based on user preferences.

The combined representation module 110 is pretrained to process the mixed query to generate an image latent representation for the combined user inputs such as the set of product category images and an product category label. It is noted that eexisting methods considers images in pairs and hence do not obtain combined representation. The combined representation module 110 creates an image embedding using a pre-trained conditional variational autoencoder and concatenates with the label embedding. The conditional variational autoencoder is trained on a Polyvore dataset (e.g., refer "M.I. Vasileva, B.A. Plummer, K. Dusad, S. Rajpal, R. Kumar, D. Forsyth. Learning type-aware embeddings for fashion compatibility. Proceedings of the European Conference on Computer Vision (ECCV). pp. 390-405, 2018"). The training loss is aggregation of three loss terms - LPIPS, Discriminator loss and KL divergence. The weight of the KL divergence term is set to 1.

The complementary latent generator module 112 generates an image latent embedding of the target image. This module considers random noise and target category as inputs and is passed through a set of dense layers. In each step, the inputs are infused through a learnable affine transformation which specializes generator output with combined representation conditioning. Further, the complementary latent generator module 112 is trained using an adversarial loss and a classifier loss in auxiliary classifier and discriminator.

The target latent discriminator module 114 unlike traditional conditional discriminators considering image and corresponding labels differentiating between latent representation of generated images and the ground-truth target images with categories. The target latent discriminator module 114 concatenates the latent representation and one-hot target category vector and passes them through two dense layers with leaky Relu activation.

The retrieval gallery 116 is a database engine which helps in retrieving a set of complementary items that are visually similar with the target candidate image.

FIG.3A and FIG.3B (collectively referred as FIG.3) depicts a flow diagram of an example process to recommend complementary items for the mixed query of the user request using the system of FIG.1, in accordance with an embodiment of the present disclosure. In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG.1 through FIG.2, and the steps of flow diagram as depicted in FIG.3 through FIG.8. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 a one or more hardware processor is configured to receive a mixed query from a user comprising a set of product category images along with product category labels to obtain complementary target candidate image items. The set of product category images are preselected by the user in the e-commerce website or application.

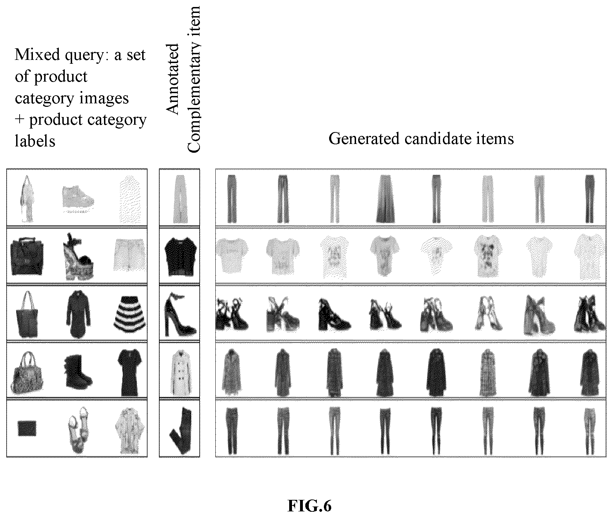

Referring to the above example as depicted in FIG.2 and FIG.6, the user provides the mixed query as input to obtain complementary target candidate image items for fashion outfits. The set of product category images may include one or more images of pre-selected compatible fashion items along with the product category labels.

In the mixed query the set of product category images may include a shirt, and a skirt and the product category label provided by the user may include "show a bag and shoe which match with my skirt and shirt". Existing methods for similar item search look for items which have the same attributes, such as pattern, texture, color, sleeve, etc. Hence, similar item search is easily realizable and quantifiable. It is noted that every individual user the recommendation must be different based on demographic features and hence compatibility is different.

At step 304 of the method 300 the one or more hardware processors is configured to concatenate the set of product category images with one hot encoding of the product category labels to obtain an image latent representation.

Here, the mixed query received from the user at step 302 is further processed by the combined representation module 110 of the system 100. The combined representation module 110 includes a conditional variational autoencoder (VAE) comprising an encoder, a decoder, a set of fully connected dense layers, and a transformer encoder. The encoder receives the set of product category images. The set of fully connected dense layers receives the product category labels from the mixed query. The conditional VAE concatenates the inputs of the encoder and the set of connected dense layers to obtain image latent representation. The conditional VAE is trained on images of fashion items using a Learned Perceptual Image Patch Similarity engine ( LPIPS (known in the art database) and a patch based discriminator. The product category labels of fashion item forms conditional input of the VAE. Reconstruction loss based on the LPIPS and patch based discriminator prevents blurry reconstructions. The conditioning helps in the generation of images from the specified target category.

In one embodiment, the combined representation module 110 considers the encoder output of the pre-trained variational auto-encoder and obtain a 64-dimension image and label embedding using two dense layers. After concatenation, they are fed to the transformer encoder, which is trained using cross-entropy loss function and Adam optimizer.

At step 306 of the method 300 the one or more hardware processors is configured to provide the image latent representation to a transformer encoder to obtain combined latent representation of the mixed query.

The transformer encoder of the combined representation module 110 performs self-attention, extracting loss-range dependencies between all items and enhances latent representation. This representation is further connected to a dense layer of two nodes to predict compatibility between input items.

Now at step 308 of the method 300 the one or more hardware processors is configured to generate a target latent representation for the combined latent representation of the mixed query.

Here, the complementary latent generator module 112 obtains random noise, and the product target category as input for the image latent representation received from the step 306. Further, an adaptive normalization is performed on the image latent representation and the combined image latent representation. Finally, the target latent representation for the combined latent representation is generated based on the category condition and the complementary criteria using the random noise and the product target category.

The complementary criteria is the notion of compatibility between pre-selected and generated items, optionally based on user or attribute preferences.

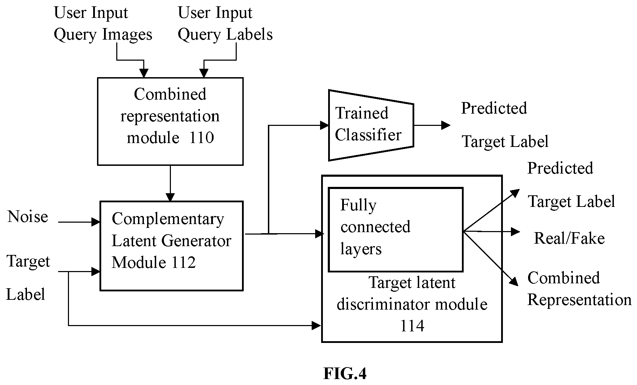

In the same embodiment, the complementary latent generator module 112 (referring to FIG.4) between each dense layer the image latent representation is infused through a learnable affine transformation which specializes generator output with combined representation conditioning. Here, the complementary latent generator module 112 operates in latent space instead of image space to minimize computational complexity and training complexity. $x_{out}$ and the combined representation module 110 as outfit $x_{fusion}$ is given in Equation $x_{out}$ first undergoes normalization followed by learnable scaling and shifting by the fashion outfit representation.

$$x_{fusion} = dense(f_{outfit}).\left(\frac{x_{out} - \mu(x_{out})}{\sigma(x_{out})}\right) + dense(f_{outfit})$$

---- Equation 1

Further, to enforce the target category and the compatibility with respect to the pre-selected compatible items, the generated output is connected with the pre-trained auxiliary classifier unit and with the combined representation module 110 via the pre-trained decoder. This generator output followed by the pre-trained decoder generates the target candidate image which can be used for retrieval of items similar to target candidate image. The complementary latent generator module 112 is trained using several loss functions. Firstly, the generator tries to fool the discriminator by maximizing discriminator score. Considering a generator as G, discriminator as D, input to generator as z with batch size $B$, real input image embedding as $x$, the loss to perform this is given in Equation 2,

$$L_{real/fake} = -\frac{1}{B}\sum_{i=1}^{B} D(G(z_i))$$

---- Equation 2

Secondly, a cross-entropy loss function $L_{aux}$ in the auxiliary classifier branch facilitates classifier guidance. This cross-entropy loss function enforces the generator to learn target latent embedding of the target category. Thirdly, the cross entropy loss function $L_{compat}$ in the combined representation module 110 enforces compatibility between the generated item and the pre-selected compatible items. Finally, the MSE loss $L_{outfic}$ and cross entropy loss $L_{disc-cat}$ in the outfit representation and target category embeddings, respectively, obtained from the discriminator. Adding them together, the overall generator loss $L_G$ as in Equation 3,

$$L_{G=}(L_{real/fake} + L_{outfit} + L_{disc-cat}) + L_{aux} + L_{compat}$$

----Equation 3

In one embodiment, the auxiliary classifier considers a five-layer neural networks with 352 128, 256, 128 and 64 nodes in intermediate layers. The model takes the input after the reparameterization event of the variational auto-encoder encoder output and is trained using cross-entropy loss and Adam optimizer.

At step 310 of the method 300 the one or more hardware processors is configured to generate by a decoder for the combined latent representation one or more target candidate images corresponding to a target latent representation based on a target category condition and a complementary criteria.

In one embodiment, the target latent discriminator module 114 unlike traditional conditional discriminators considering image and corresponding labels which differentiates between the latent representation of generated and the ground-truth target images with categories. The target latent discriminator module 114 concatenates the latent representation and one-hot target category vector and passes them through two dense layers with leaky Relu activation. Further, to enforce information flow from generator, the output of second dense layer goes through a two-layer classifier for discrete label (i.e., target category) classification and a single layer for continuous condition (i.e., combined representation) estimation. The last branch is passed through a dense layer to predict the quality of the generated image. Similar to the complementary latent generator, the target latent discriminator module 114 is trained using several loss functions. Firstly, for the discriminator to effectively distinguish between real and fake latent representation of target images. The loss function L' real / fake is given in Equation 4,

$$L'_{real/fake} = -\frac{1}{B}\sum_{i=1}^{B}[D(x_i) - D(G(z_i))] + \lambda\frac{1}{B}\sum_{i}^{B}(\left\|\nabla_{\widehat{x_t}}D(\widehat{x_i})\right\|2 - 1)^2$$

---- Equation 4

Here, $\widehat{x_i}$ is obtained by uniformly sampling along a straight line between real and fake target latent representations. Apart from this, compute classifier loss L' cat is computed for real and fake samples using cross entropy loss functions and target category to enforce category information propagation and class conditional generation. Finally, an MSE loss is computed between the combined representation and output latent representation from discriminator L' outfit to enforce outfit representation in generation. Adding them up, the overall loss function of the discriminator $L_D$ can be given in Equation 5,

$$L_D = L'_{real/fake} + L'_{cat} + L'_{outfit}$$

---- Equation 5

In one embodiment, during the training of the target latent discriminator module 114 three dense layers are considered having 32, 64 and 32 nodes, respectively in the generator and three dense layers of 32, 16 and 1 nodes in the discriminator. At input of the generator, the random noise to be a 1-D array of 8 random values. For learned affine transformation in generator, the single dense layer is used for both scaling and shifting. For both generator and discriminator, we have used Adam optimizer with learning rate 0.0002. In gradient penalty, the λ value is considered to be 5. The target latent discriminator module 114 is trained once after every five iterations of discriminator.

At step 312 of the method 300 the one or more hardware processors is configured to retrieve a set of compatible complementary target candidate image items from a retrieval gallery for the one or more target candidate images.

At step 314 of the method 300 the one or more hardware processors is configured to display the set of compatible complementary target candidate image items on electronic device of the user. Referring now to FIG.6, here the fashion outfit example depicts generation of the set of candidate images without ground-truth target item. Here, images represent pre-selected compatible query items, the image represents the annotated target item and images represent items generated using the query items.

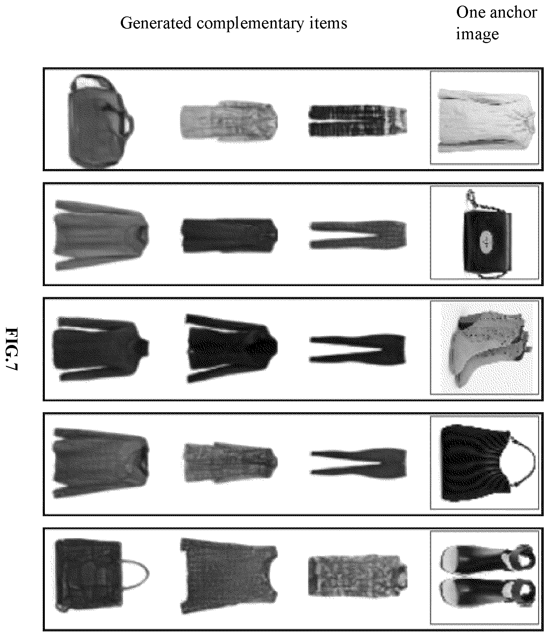

FIG.7 illustrates the fashion outfit example generating the set of complementary items for one anchor image using the system of FIG. 1, in accordance with an embodiment of the present disclosure.

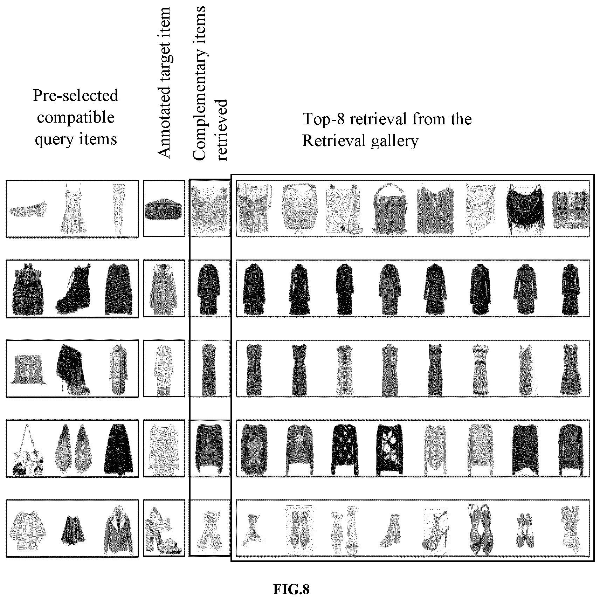

FIG.8 illustrates visual examples of retrieving the set of complementary items from a retrieval gallery for the target candidate image without ground-truth target item using the system of FIG. 1, in accordance with an embodiment of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of complementary items generation. The embodiment, thus provides method and system to recommend complementary items through candidate target item generation. Moreover, the embodiments herein further provides complementary recommendation by incorporating variability in generated images. The method provides advantages without trained using positive and negative item annotation making it free from annotation bias. The method does not require complex training setup and use of mask annotation, it is simpler to train and infer.

The method provides captures the variability in complementary items and can recommend to users a range of complementary fashion items. Moreover, the solution can generate fashion outfits with or without any anchor image, and it can consider attribute preference for the user while retrieving complementary items, thereby personalizing user experience.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed

## EP 4 672 029 A1

embodiments being indicated by the following claims.

### Claims

1. A processor implemented method (300) to recommend complementary items through candidate target item generation, the method comprising:

   receiving (302) via one or more hardware processors, a mixed query from a user comprising a set of product category images along with product category label to obtain complementary target candidate image items, wherein the set of product category images are preselected by the user;
   concatenating (304) via one or more hardware processors, the set of product category images with one hot encoding of the product category labels to obtain an image latent representation;
   providing (306) the image latent representation to a transformer encoder to obtain combined latent representation of the mixed query via the one or more hardware processors;
   generating (308) via the one or more hardware processors, a target latent representation for the combined latent representation of the mixed query;
   generating (312) by a decoder for the combined latent representation via the one or more hardware processors, one or more target candidate images corresponding to a target latent representation based on a target category condition and a complementary criteria;
   retrieving (314) via the one or more hardware processors, a set of compatible complementary target candidate image items for the one or more target candidate images from a retrieval gallery; and
   displaying (316) via the one or more hardware processors, the set of compatible complementary target candidate image items on electronic device of the user.

2. The processor implemented method as claimed in claim 1, wherein the target latent representation for the combined latent representation is generated by,

   obtaining the combined latent representation, random noise, and the product target category;
   passing the combined latent representation to a set of fully connected dense layers;
   performing an adaptive normalization on the image latent representation and the combined image latent representation; and
   generating the target latent representation for the combined latent representation of the mixed query based on the category condition and the complementary criteria using the random noise and the product target category.

3. The processor implemented method as claimed in claim 1, wherein the set of compatible target image items for the mixed query are retrieved from the retrieval gallery.

4. The processor implemented method as claimed in claim 1, wherein the set of retrieved compatible complementary target candidate image items are displayed on the user device based on user preferences.

5. The processor implemented method as claimed in claim 1, wherein the set of complementary target candidate image generated for the set of inputs matches the target product category with variations based on user preferences.

6. A system (100) to recommend complementary items through candidate target item generation, comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

   receive a mixed query from a user comprising a set of product category images along with product category label to obtain complementary target candidate image items, wherein the set of product category images are preselected by the user;
   concatenate the set of product category images with one hot encoding of the product category labels to obtain an image latent representation;
   provide the image latent representation to a transformer encoder to obtain combined latent representation of the mixed query;

generate a target latent representation for the combined latent representation of the mixed query;

generate by a decoder for the combined latent representation one or more target candidate images corresponding to a target latent representation based on a target category condition and a complementary criteria;

retrieve a set of compatible complementary target candidate image items for the one or more target candidate images from a retrieval gallery; and

display the set of compatible complementary target candidate image items on electronic device of the user.

7. The system of claim 6, wherein the target latent representation for the combined latent representation is generated by,

obtaining the combined latent representation, random noise, and the product target category;

passing the combined latent representation to a set of fully connected dense layers;

performing an adaptive normalization on the image latent representation and the combined image latent representation; and

generating the target latent representation for the combined latent representation of the mixed query based on the category condition and the complementary criteria using the random noise and the product target category.

8. The system of claim 6, wherein the set of compatible target image items for the mixed query are retrieved from the retrieval gallery.

9. The system of claim 6, wherein the set of retrieved compatible complementary target candidate image items are displayed on the user device based on user preferences.

10. The system of claim 6, wherein the set of complementary target candidate image generated for the set of inputs matches the target product category with variations based on user preferences.

11. One or more non-transitory machine-readable information storage mediums comprising one or more instructions which when executed by one or more hardware processors cause:

receiving, a mixed query from a user comprising a set of product category images along with product category label to obtain complementary target candidate image items, wherein the set of product category images are preselected by the user;

concatenating, the set of product category images with one hot encoding of the product category labels to obtain an image latent representation;

providing the image latent representation to a transformer encoder to obtain combined latent representation of the mixed query;

generating, a target latent representation for the combined latent representation of the mixed query;

generating by a decoder for the combined latent representation, one or more target candidate images corresponding to a target latent representation based on a target category condition and a complementary criteria;

retrieving, a set of compatible complementary target candidate image items for the one or more target candidate images from a retrieval gallery; and

displaying, the set of compatible complementary target candidate image items on electronic device of the user.

12. The one or more non-transitory machine readable information storage mediums as claimed in claim 11, wherein the target latent representation for the combined latent representation is generated by,

obtaining the combined latent representation, random noise, and the product target category;

passing the combined latent representation to a set of fully connected dense layers;

performing an adaptive normalization on the image latent representation and the combined image latent representation; and

generating the target latent representation for the combined latent representation of the mixed query based on the category condition and the complementary criteria using the random noise and the product target category.

13. The one or more non-transitory machine readable information storage mediums as claimed in claim 11, wherein the set of compatible target image items for the mixed query are retrieved from the retrieval gallery.

14. The one or more non-transitory machine readable information storage mediums as claimed in claim 11, wherein the set of retrieved compatible complementary target candidate image items are displayed on the user device based on user preferences.

15. The one or more non-transitory machine readable information storage mediums as claimed in claim 11, wherein the set of complementary target candidate image generated for the set of inputs matches the target product category with variations based on user preferences.

Complementary item recommendation system 100

Hardware Processor(s) 104

I/O Interface(s) 106

Memory 102

Modules 108

Combined representation module 110

Complementary latent generator module 112

Target latent discriminator module 114

Retrieval gallery 116

FIG.1

User Input Query    User Input Query
Images              Labels

Combined
representation
module 110

Target Candidate Image

Noise

Complementary latent
generator module 112

Decoder

Retrieval
Gallery
116

Yes

Target

Label

Output
Complementary
items

**FIG.2**

**300**

receive a mixed query from a user comprising a set of product category images along with product category label to obtain complementary target candidate image items, wherein the set of product category images are preselected by the user

**302**

concatenate the set of product category images with one hot encoding of the product category labels to obtain an image latent representation

**304**

provide the image latent representation to a transformer encoder to obtain combined latent representation of the mixed query

**306**

generate a target latent representation for the combined latent representation of the mixed query

**308**

A

**FIG. 3A**

A

generating by a decoder for the combined latent representation one or more target candidate images corresponding to a target latent representation based on a target category condition and a complementary criteria

310

retrieve a set of compatible complementary target candidate image items for the one or more target candidate images from a retrieval gallery

312

display the set of compatible complementary target candidate image items on electronic device of the user

314

**FIG. 3B**

User Input
Query Images

User Input
Query Labels

Combined
representation
module 110

Trained
Classifier

Predicted

Target Label

Noise

Target

Label

Complementary
Latent Generator
Module 112

Fully
connected
layers

Target latent
discriminator module
114

Predicted

Target Label

Real/Fake

Combined
Representation

**FIG.4**

16

Training
dataset
Query
Images → Trained Encoder

Training
dataset
Query
Labels → Fully connected layers

concatenated → Transformer Encoder → Fully connected layers

Output

Combined representation

Output

Compatible or Not compatible

**FIG.5**

Mixed query: a set of product category images + product category labels

Annotated Complementary item

Generated candidate items

FIG.6

One anchor image

Generated complementary items

FIG.7

Pre-selected compatible query items

Annotated target item

Complementary items retrieved

Top-8 retrieval from the Retrieval gallery

FIG.8

Europäisches
Patentamt

European
Patent Office

Office européen
des brevets

# EUROPEAN SEARCH REPORT

**Application Number**

EP 25 18 4142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROHAN SARKAR ET AL: "OutfitTransformer: Learning Outfit Representations for Fashion Recommendation", ARXIV.ORG, CORNELL UNIVERSITY LIBRARY, 201 OLIN LIBRARY CORNELL UNIVERSITY ITHACA, NY 14853, 15 April 2022 (2022-04-15), XP091202196, * abstract * * page 6 - page 10 * ----- | 1-15 | INV. G06F16/532 G06F16/535 G06F16/58 |

**TECHNICAL FIELDS SEARCHED (IPC)**

G06F

The present search report has been drawn up for all claims

| Place of search | Date of completion of the search | Examiner |
|---|---|---|
| The Hague | 23 September 2025 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421048432

**Non-patent literature cited in the description**

- **M.I. VASILEVA** ; **B.A. PLUMMER** ; **K. DUSAD** ; **S. RAJPAL** ; **R. KUMAR** ; **D. FORSYTH**. Learning type-aware embeddings for fashion compatibility. *Proceedings of the European Conference on Computer Vision (ECCV).*, 2018, 390-405